# EUROPEAN PATENT APPLICATION

(11) **EP 4 546 608 A1**
(43) Date of publication of application: **30.04.2025**
(21) Application number: 23858737.2
(22) Date of filing: 19.05.2023
(51) Int. Cl.: H02J 7/06, H04M 1/02

(54) **CIRCUIT SYSTEM AND FOLDABLE TERMINAL**

(30) Priority: 31.08.2022 CN 202211058826
(71) Applicant: Huawei Technologies Co., Ltd., Shenzhen, Guangdong 518129 (CN)
(72) Inventor: ZHANG, Fenwei, Shenzhen, Guangdong 518129 (CN); LI, Hua, Shenzhen, Guangdong 518129 (CN)
(74) Representative: Pfenning, Meinig & Partner mbB
(86) International application number: PCT/CN2023/095291
(87) International publication number: WO 2024/045698

(57) **Abstract**

A circuit system and a foldable terminal are provided, and relate to the field of terminal technologies, to reduce impedance of a jumper wire of a power supply channel between two circuits that are used for different panels in the foldable terminal and that are related to charging and discharging of a system, and reduce channel power consumption during charging and discharging. The foldable terminal includes a first panel and a second panel. The circuit system includes a first circuit of the first panel and a second circuit of the second panel. The two circuits are coupled through a wire of a power supply channel in a rotating shaft that connects the two panels. The first circuit includes a fast charging circuit, a non-fast charging circuit, a first control switch, a first power switch, and a second power switch. The second circuit includes a second control switch. The four switches are controlled to be turned on and off, so that the fast charging circuit can charge in series a first battery corresponding to the first panel and a second battery corresponding to the second panel, and the non-fast charging circuit can charge in parallel the first battery corresponding to the first panel and the second battery corresponding to the second panel.

## Description

This application claims priority to Chinese Patent Application No. 202211058826.4, filed with the China National Intellectual Property Administration on August 31, 2022 and entitled "CIRCUIT SYSTEM AND FOLDABLE TERMINAL", which is incorporated herein by reference in its entirety.

### TECHNICAL FIELD

This application relates to the field of terminal technologies, and in particular, to a circuit system and a foldable terminal.

### BACKGROUND

As terminal technologies rapidly develop, mobile terminals such as a notebook computer, a tablet computer, and a smartphone have gradually become indispensable devices in people's daily life and work, and most of these terminal devices support large-size display and fast charging (fast charge) technologies. Currently, to meet convenience of carrying by consumers, a foldable terminal has become a development trend. The foldable terminal usually includes two foldable panels (panel), and the two panels may be presented in a folded state or an unfolded state. However, due to folding, a battery of the foldable terminal needs to be split into two batteries, and the two batteries are respectively placed in two different panels. As a result, in comparison with a single-panel terminal, a great contradiction is generated in implementation of fast charge of the foldable terminal. How to reduce an increase in impedance of a charging channel caused by folding, reduce charging losses, and improve charging power is a key design.

### SUMMARY

This application provides a circuit system and a foldable terminal, to reduce impedance of a jumper wire of a power supply channel between two circuits related to system charging and discharging in two panels connected to a same rotating shaft in the foldable terminal, so as to reduce power consumption during charging and discharging.

To achieve the foregoing objective, this application uses the following technical solutions.

According to a first aspect, a circuit system is provided, and is used in a foldable terminal including a first panel and at least one second panel. The circuit system includes a first circuit of the first panel and at least one second circuit of the at least one second panel, each of the at least one second circuit corresponds to one of the at least one second panel; the first circuit includes a fast charging circuit, a non-fast charging circuit, a first control switch, a first power switch, and a second power switch; each second circuit includes a second control switch; an output end of the non-fast charging circuit is coupled to a first end of the first control switch, a first end of the second control switch, and a first end of the first power switch; an output end of the fast charging circuit is coupled to a second end of the first control switch and an electrode of a first battery corresponding to the first panel; a second end of the first power switch and a first end of the second power switch are coupled to another electrode of the first battery; a second end of the second power switch is grounded; and a second end of the second control switch is coupled to an electrode of a second battery corresponding to the second panel, and another electrode of the second battery is grounded.

In the circuit system provided in the foregoing technical solution, the first circuit and the at least one second circuit are coupled through a power supply channel between two circuits located in two adjacent panels by using only one jumper wire. For example, the first circuit of the first panel and the second circuit of one second panel need to be coupled by using only one jumper wire. This reduces impedance of the jumper wire in comparison with a related technology in which coupling is performed by using at least two jumper wires. In this way, the first control switch, the second control switch, the first power switch, and the second power switch are controlled, so that when the fast charging circuit or the non-fast charging circuit in the first circuit may charge batteries disposed in different panels, or batteries in different panels discharge, power consumption during charging and discharging is reduced.

In a possible implementation of the first aspect, the first end of the first control switch is coupled to the first end of the second control switch across a rotating shaft between the first panel and the second panel. In the foregoing possible implementation, the first control switch in the first circuit and the second control switch in the second circuit are coupled across the rotating shaft, so that coupling reliability can be ensured, and impedance of the jumper wire can be further reduced.

In a possible implementation of the first aspect, a control end of the first control switch is configured to receive a first control signal; a control end of the second control switch is configured to receive a second control signal; a control end of the first power switch is configured to receive a third control signal; and a control end of the second power switch is configured to receive a fourth control signal. In the foregoing possible implementation, the four switches may be controlled to be in different states based on the control signals, so that the circuit system is in different working modes.

In a possible implementation of the first aspect, when the fast charging circuit charges the first battery and the second battery in series, the first power switch is turned on under an action of the third control signal, the second control switch is turned on under an action of the second control signal, the first control switch is turned off under an action of the first control signal, and the second power switch is turned off under an action of the fourth control signal. In this case, there is a charging channel for charging the first battery and the first battery in series: fast charging circuit-first battery-first power switch-second control switch-second battery. In the foregoing possible implementation, when the first control switch is turned off, the second control switch is turned on, the first power switch is turned on, and the second power switch is turned off, batteries disposed in different panels may be charged by the fast charging circuit in the first circuit. This reduces power consumption during charging of the fast charging circuit.

In a possible implementation of the first aspect, when the non-fast charging circuit charges the first battery and the second battery in parallel, the first control switch is turned on under the action of the first control signal, the second power switch is turned on under the action of the fourth control signal, the second control switch is turned on under the action of the second control signal, and the first power switch is turned off under the action of the third control signal. Optionally, the non-fast charging circuit may be a buck circuit or a buck-boost circuit. In this case, there is a charging channel of the first battery: non-fast charging circuit-first control switch-first battery-second power switch, and there is a charging channel of the second battery: non-fast charging circuit-second control switch-second battery. In the foregoing possible implementation, when the first control switch is turned on, the second control switch is turned on, the first power switch is turned off, and the second power switch is turned on, batteries disposed in different panels may be charged by the non-fast charging circuit in the first circuit. This reduces power consumption during charging of the non-fast charging circuit.

In a possible implementation of the first aspect, the first circuit further includes a first system load circuit corresponding to the first panel; each second circuit further includes a second system load circuit corresponding to the second panel; when the first battery and the second battery discharge to the first system load circuit and the second system load circuit, the first control switch is turned on under the action of the first control signal, the second power switch is turned on under the action of the fourth control signal, the second control switch is turned on under the action of the second control signal, and the first power switch is turned off under the action of the third control signal. In this case, there is a discharge channel of the first battery and the second battery: second power switch-first battery-first system load circuit-second system load circuit-second control switch-second battery. In the foregoing possible implementation, when the first control switch is turned on, the second control switch is turned on, the first power switch is turned off, and the second power switch is turned on, the first battery may discharge to the first system load circuit, and the second battery may discharge to the second system load circuit. This reduces power consumption during battery discharge.

In a possible implementation of the first aspect, when the first battery discharges to the first system load circuit and the second system load circuit, the first control switch is turned on under the action of the first control signal, the second power switch is turned on under the action of the fourth control signal, the second control switch is turned off under the action of the second control signal, and the first power switch is turned off under the action of the third control signal. In this case, there is a discharge channel of the first battery: second power switch-first battery-first system load circuit-second system load circuit.

In a possible implementation of the first aspect, when the second battery discharges to the first system load circuit and the second system load circuit, the second control switch is turned on under the action of the second control signal, the first control switch is turned off under the action of the first control signal, the second power switch is turned off under the action of the fourth control signal, and the first power switch is turned off under the action of the third control signal. In this case, there is a discharge channel of the second battery: second battery-second control switch-second system load circuit-first system load circuit.

In a possible implementation of the first aspect, the at least one second panel includes a plurality of second panels, the at least one second circuit includes a plurality of second circuits, and the plurality of second circuits are connected in parallel. In the foregoing possible implementation, when the plurality of second circuits are connected in parallel, the first circuit and the two circuits that are of the plurality of second circuits and that are located on two adjacent panels need to be coupled by using only one jumper wire. This reduces impedance of the jumper wire when the foldable terminal includes the plurality of second panels, and reduces power consumption.

In a possible implementation of the first aspect, the first control switch, the second control switch, the first power switch, and the second power switch each include a metal oxide semiconductor MOS transistor. Optionally, the first control switch and the second control switch are respectively implemented by using two battery switch management modules.

In a possible implementation of the first aspect, the circuit system further includes at least one controller used for one or more of the first panel and the at least one second panel and configured to generate the first control signal, the second control signal, the third control signal, and the fourth control signal. Optionally, the at least one controller includes a first controller used for the first panel, and the first controller is configured to generate the first control signal, the second control signal, the third control signal, and the fourth control signal. For example, the first controller is a central processing unit. Alternatively, the at least one controller includes a first controller used for the first panel and a second controller used for each second panel, and each second controller may be configured to generate a corresponding second control signal. In the foregoing possible implementation, a simple and effective manner of generating the first control signal, the second control signal, the third control signal, and the fourth control signal is provided.

According to a second aspect, a foldable terminal is provided, where the foldable terminal includes the circuit system, the first panel, and the at least one second panel that are provided in any one of the first aspect or the possible implementations of the first aspect, and at least one rotating shaft; and the at least one rotating shaft is configured to connect the first panel to the at least one second panel.

In a possible implementation of the second aspect, the first end of the first control switch is coupled to the first end of the second control switch through a jumper wire, the jumper wire crosses a rotating shaft between the first panel and a second panel, and the jumper wire is a unique channel for coupling the fast charging circuit or the non-fast charging circuit to the second battery.

According to a third aspect, a control method of a circuit system is provided, where the circuit system is the circuit system provided in any one of the first aspect or the possible implementations of the first aspect, and the method includes: when the fast charging circuit is used to charge the first battery and the second battery in series, turning off the first control switch based on the first control signal, turning off the second power switch based on the fourth control signal, turning on the first power switch based on the third control signal, and turning on the second control switch based on the second control signal; and when the non-fast charging circuit is used to charge the first battery and the second battery in parallel, turning off the first power switch based on the third control signal, turning on the first control switch based on the first control signal, turning on the second power switch based on the fourth control signal, and turning on the second control switch based on the second control signal.

In a possible implementation of the third aspect, the method further includes: when the first battery discharges to the first system load circuit and the second system load circuit, turning off the second control switch based on the second control signal, turning off the first power switch based on the third control signal, turning on the first control switch based on the first control signal, and turning on the second power switch based on the fourth control signal; when the second battery discharges to the first system load circuit and the second system load circuit, turning off the first control switch based on the first control signal, turning off the second power switch based on the fourth control signal, turning off the first power switch based on the third control signal, and turning on the second control switch based on the second control signal; and when the first battery and the second battery discharge to the first system load circuit and the second system load circuit, turning off the first power switch based on the third control signal, turning on the first control switch based on the first control signal, turning on the second power switch based on the fourth control signal, and turning on the second control switch based on the second control signal.

It may be understood that, for beneficial effects that can be achieved by any foldable terminal and the control method of the circuit system provided above, refer to the beneficial effects in the circuit system provided above. Details are not described herein again.

### BRIEF DESCRIPTION OF DRAWINGS

FIG. 1 is a diagram of a structure of a foldable terminal according to an embodiment of this application;
FIG. 2 is a diagram of a structure of another foldable terminal according to an embodiment of this application;
FIG. 3 is a diagram of a structure of a parallel charging architecture according to an embodiment of this application;
FIG. 4 is a diagram of a structure of a series charging architecture according to an embodiment of this application;
FIG. 5 is a diagram of a structure of a series-parallel architecture according to an embodiment of this application;
FIG. 6 is a diagram of a structure of a circuit system according to an embodiment of this application;
FIG. 7 is a diagram of charging of a circuit system according to an embodiment of this application;
FIG. 8 is another diagram of charging of a circuit system according to an embodiment of this application;
FIG. 9 is a diagram of discharging of a circuit system according to an embodiment of this application;
FIG. 10 is a diagram of another structure of a circuit system according to an embodiment of this application; and
FIG. 11 is a diagram of a control method of a circuit system according to an embodiment of this application.

### DESCRIPTION OF EMBODIMENTS

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. At least one of the following items (pieces) or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural. In addition, in embodiments of this application, terms such as "first" and "second" are used to distinguish objects with similar names, functions, or effect. A person skilled in the art may understand that the terms such as "first" and "second" are not intended to limit a quantity and an execution sequence. The term "coupling" indicates an electrical connection, including a direct connection through a wire or a connection end or an indirect connection through another component. Therefore, "coupling" should be considered as a generalized electronic communication connection.

The following describes the technical solutions in embodiments of this application with reference to the accompanying drawings in embodiments of this application. In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. A character "/" generally indicates an "or" relationship between the associated objects. At least one of the following items (pieces) or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

In embodiments of this application, terms such as "first" and "second" are used to distinguish objects with similar names, functions, or effect. A person skilled in the art may understand that the terms such as "first" and "second" are not intended to limit a quantity and an execution sequence. The term "coupling" indicates an electrical connection, including a direct connection through a wire or a connection end or an indirect connection through another component. Therefore, "coupling" should be considered as a generalized electronic communication connection.

It should be noted that, in this application, terms such as "example" or "for example" indicate giving an example, an illustration, or a description. Any embodiment or design scheme described as "example" or "for example" in this application should not be construed as being more preferred or advantageous than other embodiments or design schemes. Specifically, use of a word like "example" or "for example" is intended to present a related concept in a specific manner.

Technical solutions of this application may be applied to various foldable terminals that support a fast charging technology. The foldable terminal may include but is not limited to a mobile phone, a tablet computer, a notebook computer, a computer, an ultra-mobile personal computer (ultra-mobile personal computer, UMPC), a netbook, a media player, a vehicle-mounted device (for example, a car, a bicycle, an electric vehicle, an airplane, a ship, a train, or a high-speed railway), a virtual reality (virtual reality, VR) device, an augmented reality (augmented reality, AR) device, or the like.

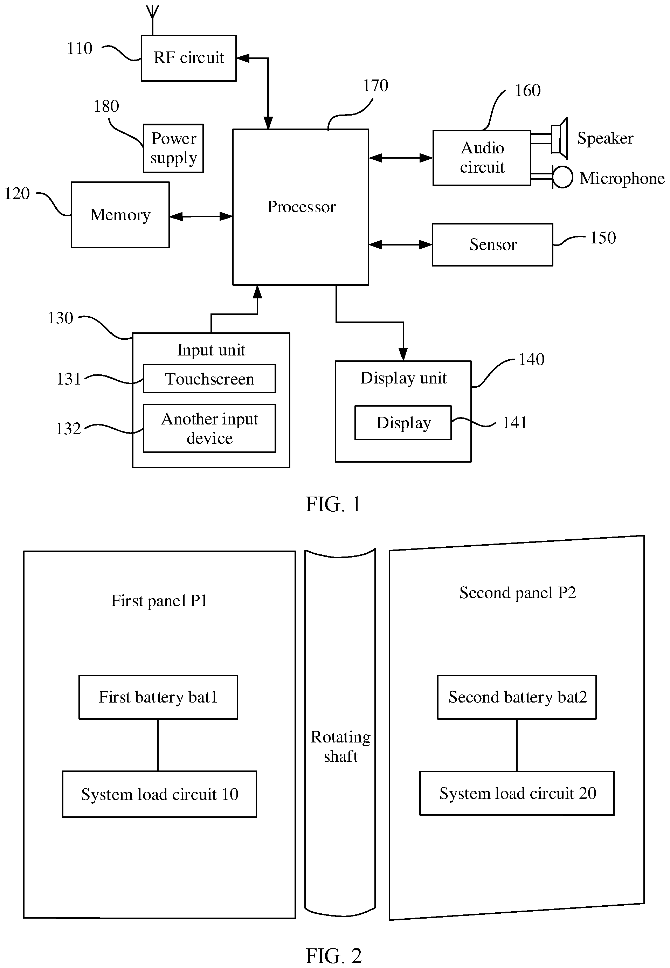

FIG. 1 is a diagram of a structure of a foldable terminal according to an embodiment of this application. The foldable terminal is described by using a mobile phone as an example. The foldable terminal may include components such as a radio frequency (radio frequency, RF) circuit 110, a memory 120, an input unit 130, a display unit 140, a sensor 150, an audio circuit 160, a processor 170, and a power supply 180. The following describes each component of the foldable terminal in detail with reference to FIG. 1.

The RF circuit 110 may be configured to receive and send information, or receive or send a signal during a call. Particularly, after receiving downlink information from a base station, the RF circuit 110 sends the downlink information to the processor 170 for processing, and sends uplink data to the base station. The RF circuit 110 usually includes but is not limited to an antenna, at least one amplifier, a transceiver, a coupler, a low noise amplifier (low noise amplifier, LNA), a duplexer, and the like. In addition, the RF circuit 110 may further communicate with a network and another device through wireless communication.

The memory 120 may be configured to store data, a software program, and a module, and mainly includes a program storage area and a data storage area. The program storage area may store an operating system and an application required by at least one function, like a sound play function or an image play function. The data storage area may store data created based on use of the foldable terminal, for example, audio data, image data, and a phone book. In addition, the foldable terminal may include a high-speed random access memory, and may further include a nonvolatile memory, for example, at least one magnetic disk storage device, a flash memory device, or another volatile solid-state storage device.

The input unit 130 may be configured to: receive input digit or character information, and generate a key signal input related to user setting and function control of the foldable terminal. Specifically, the input unit 130 may include a touchscreen 131 and another input device 132. The touchscreen 131 may collect a touch operation of a user on or near the touchscreen 131 (for example, an operation of the user on or near the touchscreen by using any suitable object or accessory like a finger or a stylus), and drive a corresponding connection apparatus based on a preset program. Optionally, the another input device 132 may include but is not limited to one or more of a physical keyboard, a function button (like a volume control button or a power on/off button), a trackball, a mouse, a joystick, or the like.

The display unit 140 may be configured to display information entered by the user or information provided for the user, various menus of the foldable terminal, and the like. In an example, the display unit 140 may include a display 141, and the display 141 may be configured in a form of a liquid crystal display (liquid crystal display, LCD), an organic light-emitting diode (organic light-emitting diode, OLED), or the like. Further, the touchscreen 131 may cover the display 141. After detecting a touch operation on or near the touchscreen 131, the touchscreen 131 transmits the touch operation to the processor 170 to determine a type of a touch event, and then the processor 170 provides a corresponding visual output on the display 141 based on the type of the touch event. In FIG. 1, the touchscreen 131 and the display 141 are used as two independent components to implement input and output functions of the foldable terminal. However, in some embodiments, the touchscreen 131 and the display 141 may be integrated to implement the input and output functions of the foldable terminal.

The sensor 150 may include one or more sensors, and is configured to provide status evaluation in various aspects for the foldable terminal. The sensor 150 may include an optical sensor. The optical sensor may be used in an imaging application, that is, become a camera or a component of a camera lens. In addition, the sensor 150 may further include an acceleration sensor, a gyroscope sensor, a magnetic sensor, a pressure sensor, or a temperature sensor. The sensor 150 may detect acceleration/deceleration, an orientation, and an on/off state of the foldable terminal, relative positioning of the component of the foldable terminal, a temperature change of the foldable terminal, or the like.

The audio circuit 160, a speaker, and a microphone may provide an audio interface between a user and the foldable terminal. The audio circuit 160 may convert received audio data into an electrical signal, and transmit the electrical signal to the speaker. The speaker converts the electrical signal into a sound signal and outputs the sound signal. In addition, the microphone converts the collected sound signal into an electrical signal. The audio circuit 160 receives the electrical signal, converts the electrical signal into audio data, and then outputs the audio data to the RF circuit 110, so that the RF circuit 110 sends the audio data to, for example, another mobile phone, or outputs the audio data to the memory 120 for further processing.

The processor 170 is a control center of the foldable terminal, connects various parts of the entire foldable terminal through various interfaces and lines, and runs or executes a software program and/or a module stored in the memory 120 and invokes data stored in the memory 120, to perform various functions of the foldable terminal and process data, so as to perform overall monitoring on the foldable terminal. Optionally, the processor 170 may include one or more processing units. The processing unit may include but is not limited to a central processing unit, a general purpose processor, a digital signal processor, a neural network processor, an image processing unit, an image signal processor, a microcontroller, a microprocessor, or the like. Further, the processor 170 may further include another hardware circuit or accelerator, like an application-specific integrated circuit, a field programmable gate array or another programmable logic device, a transistor logic device, a hardware component, or any combination thereof. Optionally, the processor 170 may alternatively be a combination of processors implementing a computing function, for example, a combination of one or more microprocessors, or a combination of a digital signal processor and a microprocessor.

The foldable terminal may further include the power supply 180 (for example, a battery) that supplies power to each component. The power supply 180 may be logically connected to the processor 170 through a power management system, to implement functions such as charging management, discharging management, and power consumption management by using the power management system. In this embodiment of this application, the power supply 180 may include a plurality of batteries, and the power management system may support both a fast charging technology and a non-fast charging technology, so that the power management system may charge the plurality of batteries through the fast charging technology, or may charge the plurality of batteries through the non-fast charging technology.

Although not shown, the foldable terminal may further include a wireless fidelity (wireless fidelity, Wi-Fi) module, a Bluetooth module, and the like. Details are not described herein in embodiments of this application. A person skilled in the art may understand that the structure of the foldable terminal shown in FIG. 1 does not constitute a limitation on the foldable terminal, and may include more or fewer components than those shown in the figure, or combine some components, or have different component arrangements.

Further, as shown in FIG. 2, the foldable terminal may include a plurality of foldable panels (panels), the plurality of panels may be connected through a rotating shaft (shaft), and each panel may be correspondingly provided with one battery (battery) in the power supply 180. Therefore, a plurality of batteries may be disposed in the plurality of panels. The plurality of batteries may be configured to supply power to a plurality of system load circuits (system loads) in the foldable terminal. The plurality of system load circuits each may include the foregoing components (for example, the RF circuit, the memory, the input unit, the display unit, the sensor, the audio circuit, and the processor), some circuits in the foregoing components, or the like. In FIG. 2, an example in which the foldable terminal includes a first panel P1 and a second panel P2, a first battery bat1 is disposed in the first panel P1, and a second battery bat2 is disposed in the second panel P2 is used for description.

Optionally, the plurality of system load circuits may be distributed in the plurality of panels. For example, one system load circuit may be disposed in one panel, or different parts of one system load circuit may be disposed in different panels. For example, the display 141 in the display unit 140 is used as an example. The display 141 may include two display areas, and the two display areas may be respectively disposed on two different panels. Alternatively, the display unit 140 includes two displays 141, and the two displays 141 are respectively disposed on two different panels. In FIG. 2, an example in which a system load circuit 10 is disposed in the first panel P1 and a system load circuit 20 is disposed in the second panel P2 is used for description.

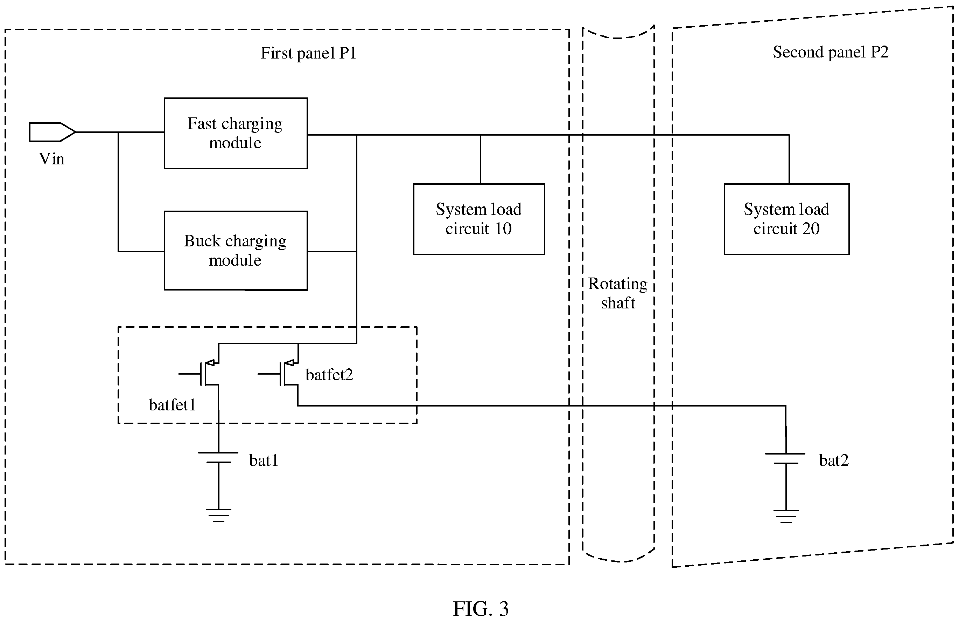

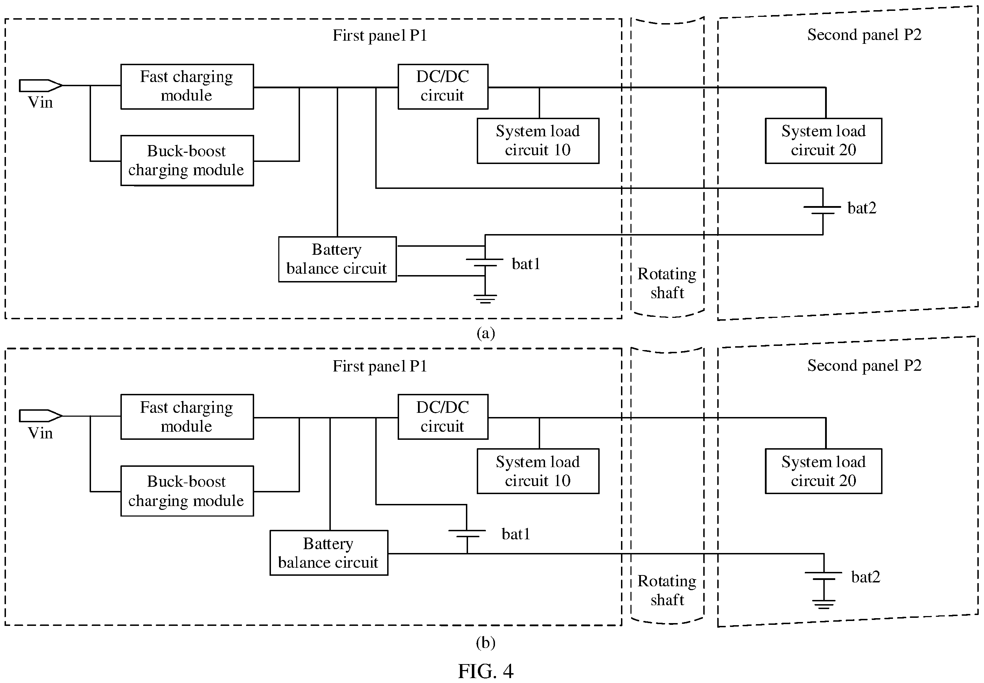

Currently, for a foldable terminal that supports a fast charging technology and has two panels, in a related technology, two batteries in the power supply 180 are usually respectively placed in two different panels, and the two batteries are charged and discharged by using the following several solutions. The following describes the several solutions by using FIG. 3 and FIG. 4.

In a first solution, the two batteries are charged through a parallel charging architecture.

With reference to FIG. 2, as shown in FIG. 3, a power interface Vin, a fast charging module (fast charger), a buck charging module (buck charger), a first control switch batfet1, a second control switch batfet2, the first battery bat1, and the system load circuit 10 are disposed in the first panel P1, and the second battery bat2 and the system load circuit 20 are disposed in the second panel P2. An input end of the fast charging module is coupled to the power interface Vin, and an output end of the fast charging module is coupled to a first node. An input end of the buck charging module is coupled to the power interface Vin, and an output end of the buck charging module is coupled to the first node. A first end of the first control switch batfet1, a first end of the second control switch batfet2, the system load circuit 10, and the system load circuit 20 are coupled to the first node. A second end of the first control switch batfet1 is coupled to an electrode of the first battery Bat1, and a second end of the second control switch batfet2 is coupled to another electrode of the second battery bat2. The electrode of the first battery bat1 and the another electrode of the second battery bat2 are grounded. A control end of the first control switch batfet1 and a control end of the second control switch batfet2 are respectively configured to receive control signals. Specifically, when the two batteries are charged by the fast charging module or the buck charging module, the first control switch batfet1 and the second control switch batfet2 are turned on based on the control signals, so that the first battery bat1 and the second battery bat2 are charged in parallel.

In a second solution, the two batteries are charged through a series charging architecture.

With reference to FIG. 2, as shown in FIG. 4, a power interface Vin, a fast charging module, a buck-boost charging module (buck-boost charger), a battery balance (battery balance) circuit, a direct current-direct current (direct current to direct current, DC/DC) circuit, the first battery bat1, and the system load circuit 10 are disposed in the first panel P1, and the second battery Bat2 and the system load circuit 20 are disposed in the second panel P2. An input end of the fast charging module is coupled to the power interface Vin, and an output end of the fast charging module is coupled to a first node. An input end of the buck charging module is coupled to the power interface Vin, and an output end of the buck charging module is coupled to the first node. A first end of the battery balance circuit and an input end of the DC/DC circuit are coupled to the first node. The first battery bat1 and the second battery bat2 are coupled in series between the first node and a grounding end, and a coupling point of the first battery bat1 and the second battery bat2 is coupled to a second end of the battery balance circuit. An output end of the DC/DC circuit is coupled to the system load circuit 10 and the system load circuit 20. Specifically, when the two batteries are charged by the fast charging module or the buck charging module, an output voltage of the fast charging module or the buck charging module supplies power to the system load circuit 10 and the system load circuit 20 in series through the DC/DC circuit, and charges the first battery bat1 and the second battery bat2 in series. In (a) in FIG. 4, an example in which an electrode of the second battery bat2 is coupled to the first node, another electrode of the second battery bat2 is coupled to an electrode of the first battery bat1, and another electrode of the first battery bat1 is grounded is used for description. In (b) in FIG. 4, an example in which an electrode of the first battery bat1 is coupled to the first node, another electrode of the first battery bat1 is coupled to an electrode of the second battery bat2, and another electrode of the second battery bat2 is grounded is used for description.

In a third solution, the batteries are charged and discharged through a series-parallel architecture.

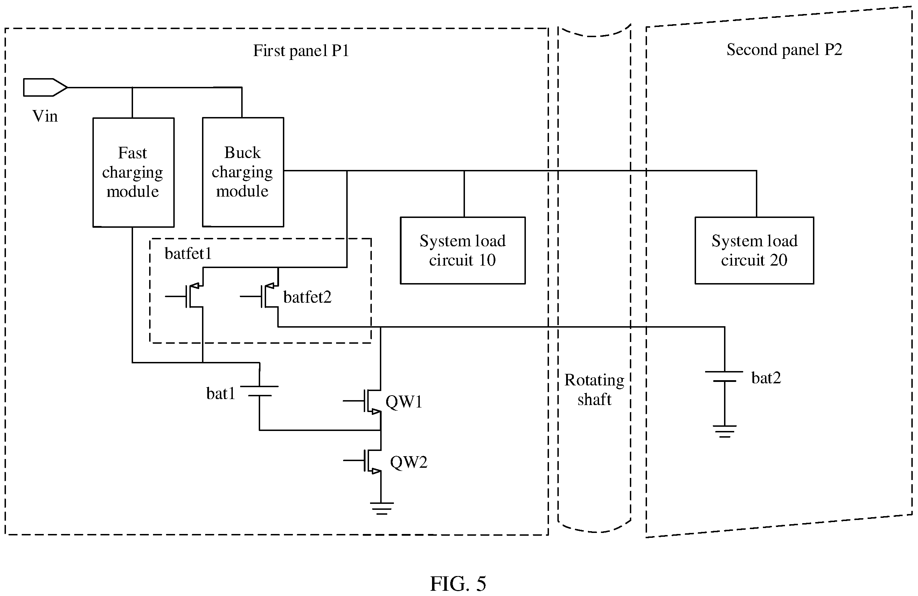

With reference to FIG. 2, as shown in FIG. 5, a power interface Vin, a fast charging module, a buck charging module, a first control switch batfet1, a second control switch batfet2, a first power switch QW1, a second power switch QW2, the first battery bat1, and the system load circuit 10 are disposed in the first panel P1, and the second battery bat2 and the system load circuit 20 are disposed in the second panel P2. An input end of the buck charging module is coupled to the power interface Vin, and an output end of the buck charging module is coupled to a first end of the first control switch batfet1, a first end of the second control switch batfet2, the system load circuit 10, and the system load circuit 20. The input end of the buck charging module is coupled to the power interface Vin, and the output end of the buck charging module is coupled to a second end of the first control switch batfet1 and an electrode of the first battery bat1. A second end of the second control switch batfet2 is coupled to a first end of the first power switch QW1 and an electrode of the second battery bat2, and another electrode of the second battery bat2 is grounded. A second end of the first power switch QW1 and a first end of the second power switch QW2 are coupled to another electrode of the first battery bat1, and a second end of the second power switch QW2 is grounded. A control end of the first control switch batfet1, a control end of the second control switch batfet2, a control end of the first power switch QW1, and a control end of the second power switch QW2 are respectively configured to receive control signals. Specifically, when the two batteries are charged by the fast charging module, the first power switch QW1 is turned on, and the first battery bat1 and the second battery bat2 are charged in series. When the two batteries are charged by the buck charging module, the first control switch batfet1 and the second control switch batfet2 are turned on, the second power switch QW2 is turned on, and the first battery bat1 and the second battery bat2 are charged in parallel. When the first battery bat1 and the second battery bat2 discharge, the first control switch batfet1 and the second control switch batfet2 are turned on, the second power switch QW2 is turned on, and the first battery bat1 and the second battery bat2 discharge in parallel.

In the foregoing three solutions, in the circuit architecture configured to charge the first battery bat1 and the second battery bat2, the two panels need to be connected across at least two wires, that is, at least two wires need to be deployed in a rotating shaft. This causes high impedance of the jumper wires, resulting in high power consumption. Based on this, an embodiment of this application provides a circuit system. In the circuit system, when batteries disposed in different panels in a foldable terminal are charged, two panels connected to a same rotating shaft need to be connected across only one wire. This reduces impedance of the jumper wire and reduces power consumption. The following describes the circuit system.

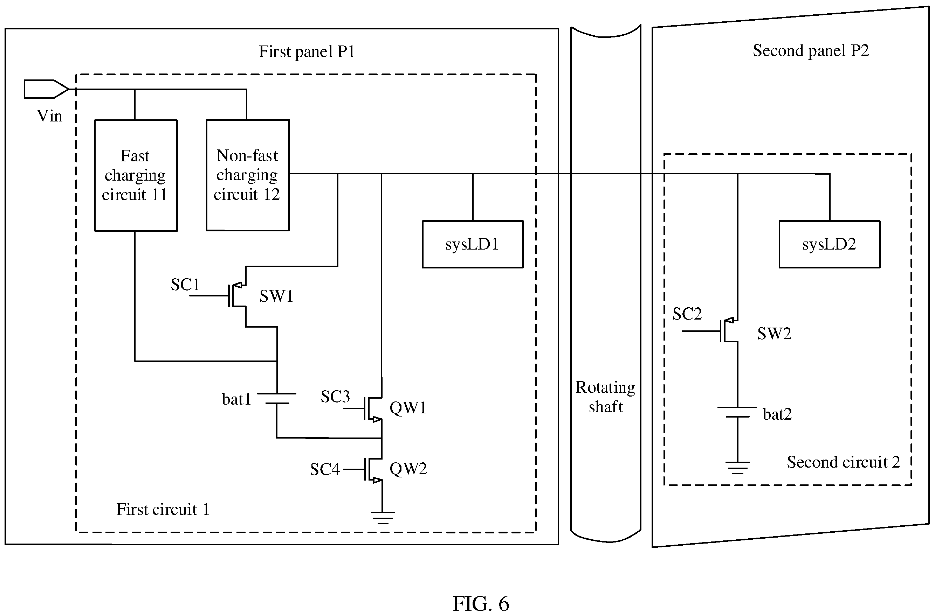

FIG. 6 is a diagram of a structure of a circuit system according to an embodiment of this application. The circuit system may be used in a foldable terminal. The foldable terminal includes a first panel P1, at least one rotating shaft, and at least one second panel P2, and the first panel P1 is connected to the at least one second panel P2 through the at least one rotating shaft. In FIG. 6, an example in which the foldable terminal includes a first panel and a second panel is used for description.

As shown in FIG. 6, the circuit system includes a first circuit 1 of the first panel and at least one second circuit 2 of the at least one second panel. Each of the at least one second circuit 2 corresponds to one of the at least one second panel. The first circuit 1 includes a fast charging circuit 11, a non-fast charging circuit 12, a first control switch SW1, a first power switch QW1, and a second power switch QW2. Each of the at least one second circuit 2 includes a second control switch SW2. In FIG. 6, an example in which the circuit system includes the first circuit 1 of the first panel and the second circuit 2 of the second panel is used for description.

Specifically, input ends of the fast charging circuit 11 and the non-fast charging circuit 12 are both coupled to a power interface Vin. An output end of the non-fast charging circuit 12 is coupled to a first end of the first control switch SW1, a first end of the second control switch SW2, and a first end of the first power switch QW1. An output end of the fast charging circuit 11 is coupled to a second end of the first control switch SW1 and an electrode (for example, a positive electrode) of a first battery bat1 corresponding to the first panel P1. A second end of the first power switch QW1 and a first end of the second power switch QW2 are coupled to another electrode (for example, a negative electrode) of the first battery bat1. A second end of the second power switch QW2 is grounded. A second end of the second control switch SW2 is coupled to an electrode (for example, a positive electrode) of a second battery bat2 corresponding to the second panel P2, and another electrode (for example, a negative electrode) of the second battery is grounded. A control end of the first control switch SW1 is configured to receive a first control signal SC1, a control end of the second control switch SW2 is configured to receive a second control signal SC2, a control end of the first power switch QW1 is configured to receive a third control signal SC2, and a control end of the second power switch QW2 is configured to receive a fourth control signal SC4.

The control switch in this application may be a switch including one or more metal-oxide semiconductor (metal-oxide semiconductor, MOS) transistors. The switch may have a function of switching (that is, turning on or off), and may further have a function of adjusting a voltage or a current when being turned on. The power switch in this application may be a single MOS transistor, and has a function of switching (that is, turning on or off).

The non-fast charging circuit 12 may be a buck charging circuit, or may be a buck-boost charging circuit. In actual application, the non-fast charging circuit 12 and the first control switch SW1 may alternatively be integrated into a same chip or module. When the non-fast charging circuit 12 is a buck charging circuit, and is integrated with the first control switch SW1 into a same module, the module may be referred to as a buck charging module (buck charger). When the non-fast charging circuit 12 is a buck-boost charging circuit, and is integrated with the first control switch SW1 into a same module, the module may be referred to as a buck-boost charging module (boost-buck charger).

In addition, the fast charging circuit 11 may be a charging circuit that supports a fast charging protocol. The fast charging protocol includes but is not limited to a fast charging (quick charge, QC) protocol, a pump express (pump express, PE) fast charging protocol, or a VOOC flash charging protocol. A charging speed of the fast charging circuit 11 is usually greater than a charging speed of the non-fast charging circuit 12. Therefore, the non-fast charging circuit 12 is also referred to as a common charging circuit. For example, a charging voltage of the non-fast charging circuit 12 may be 3 V or 5 V, and a charging power may be 10 W; and a charging voltage of the fast charging circuit 11 may be 10 V or 20 V, and a charging power may be 20 W or 40 W.

Optionally, the first end of the first control switch SW1 is coupled to the first end of the second control switch SW2 across a rotating shaft between the first panel P1 and the second panel P2. In other words, one jumper wire is disposed in the rotating shaft that connects the first panel P1 and the second panel P2, so that the first end of the first control switch SW1 is coupled to the first end of the second control switch SW2 through the jumper wire.

Optionally, the first control switch SW1, the second control switch SW2, the first power switch QW1, and the second power switch QW2 each include a metal-oxide semiconductor (metal-oxide semiconductor, MOS) transistor. The first control switch SW1 and the second control switch SW2 may be one module including a plurality of MOS transistors. In a charging and discharging process of the circuit system, the first control switch SW1 and the second control switch SW2 have a function of switching (that is, turning on or off), and may further have a function of adjusting a voltage or a current when being turned on. The first power switch QW1 and the second power switch QW2 may be a single MOS transistor, and have a function of switching (that is, turning on or off). During actual application, specifically, the first control switch SW1 and the second control switch SW2 may be respectively implemented by using two battery switch management modules batfet (which may also be referred to as battery charging and discharging modules). For example, the first control switch SW1 is a first batfet, and the second control switch SW2 is a second batfet.

Further, as shown in FIG. 6, the first circuit 1 further includes a first system load circuit sysLD1 corresponding to the first panel P1, where the first system load circuit sysLD1 is coupled to the first end of the first power switch QW1; and each second circuit 2 further includes a second system load circuit sysLD2 corresponding to a second panel P2, where the second system load circuit sysLD2 is coupled to the first end of the first power switch QW1.

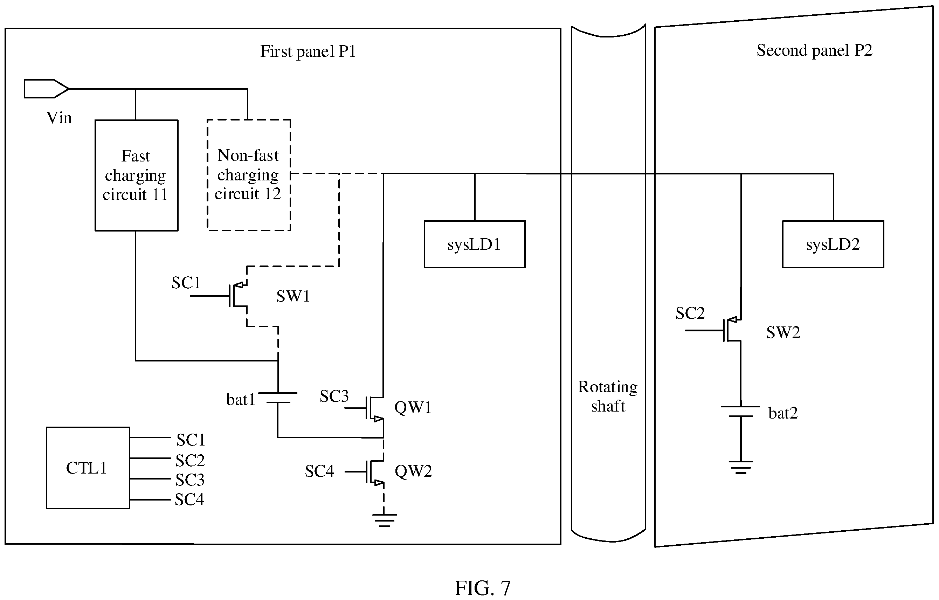

In a possible embodiment, as shown in FIG. 7, when the fast charging circuit 11 charges the first battery bat1 and the second battery bat2 in series, the first power switch QW1 is turned on under an action of the third control signal SC3, the second control switch SW2 is turned on under an action of the second control signal SC2, the first control switch SW1 is turned off under an action of the first control signal SC1, and the second power switch QW2 is turned off under an action of the fourth control signal SC4.

Specifically, when the fast charging circuit 11 is used to charge the first battery bat1 and the second battery bat2, the first power switch QW1 may be turned on based on the third control signal SC3, the second control switch SW2 may be turned on based on the second control signal SC2, the first control switch SW1 may be turned off based on the first control signal SC1, and the second power switch QW2 may be turned off based on the fourth control signal SC4. In this case, the first battery bat1 and the second battery bat2 are charged in series, and there is a corresponding charging channel: fast charging circuit 11-first battery bat1-first power switch QW1-second control switch SW2-second battery bat2.

In addition, in a process in which the fast charging circuit 11 is used to charge the first battery bat1 and the second battery bat2, the fast charging circuit 11 may further supply power to the first system load circuit sysLD1 and the second system load circuit sysLD2 through the first end of the first power switch QW1.

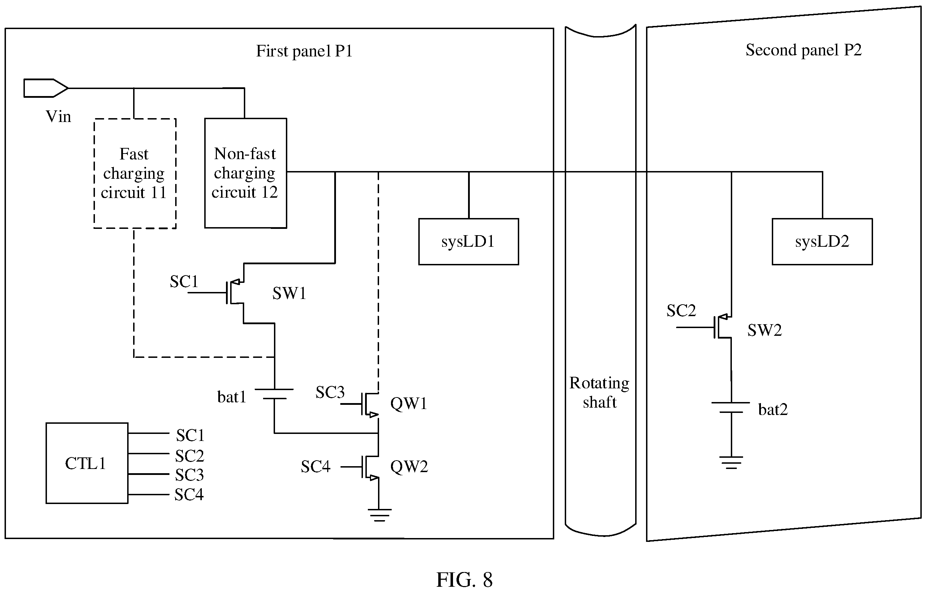

In another possible embodiment, as shown in FIG. 8, when the non-fast charging circuit 12 charges the first battery bat1 and the second battery bat2 in parallel, the first control switch SW1 is turned on under the action of the first control signal SC1, the second power switch QW2 is turned on under the action of the fourth control signal SC4, the second control switch SW2 is turned on under the action of the second control signal SC2, and the first power switch QW1 is turned off under the action of the third control signal SC3.

Specifically, when the non-fast charging circuit 12 is used to charge the first battery bat1 and the second battery bat2, the first control switch SW1 may be turned on based on the first control signal SC1, the second power switch QW2 may be turned on based on the fourth control signal SC4, the first power switch QW1 may be turned off based on the third control signal SC3, and the second control switch SW2 may be turned on based on the second control signal SC2. In this case, the first battery bat1 and the second battery bat2 are charged in parallel, and there are a charging channel corresponding to the first battery bat1: non-fast charging circuit 12-first control switch SW1-first battery bat1-second power switch QW2, and a charging channel corresponding to the second battery bat2: non-fast charging circuit 12-second control switch SW2-second battery bat2.

In addition, in a process in which the non-fast charging circuit 12 is used to charge the first battery bat1 and the second battery bat2, the non-fast charging circuit 12 may further directly supply power to the first system load circuit sysLD1 and the second system load circuit sysLD2.

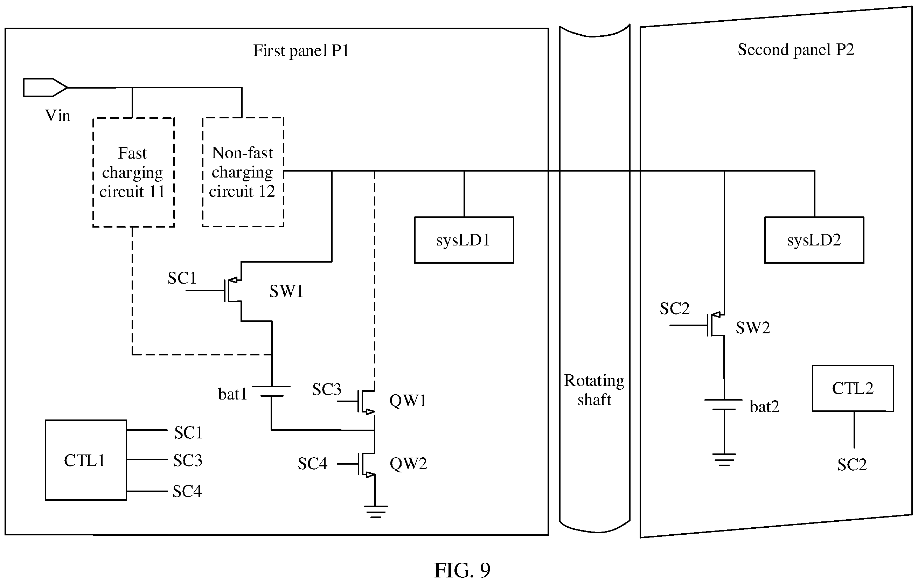

In still another possible embodiment, as shown in FIG. 9, when the first battery bat1 and the second battery bat2 discharge to the first system load circuit sysLD1 and the second system load circuit sysLD2, the first control switch SW1 is turned on under the action of the first control signal SC1, the second power switch QW2 is turned on under the action of the fourth control signal SC4, the second control switch SW2 is turned on under the action of the second control signal SC2, and the first power switch QW1 is turned off under the action of the third control signal SC3.

Specifically, when the first battery bat1 and the second battery bat2 discharge, the first control switch SW1 may be turned on based on the first control signal SC1, the second power switch QW2 may be turned on based on the fourth control signal SC4, the first power switch QW1 may be turned off based on the third control signal SC3, and the second control switch SW2 may be turned on based on the second control signal SC2. In this case, the first battery bat1 and the second battery bat2 discharge in parallel, and there is a discharge channel corresponding to the first battery bat1 and the second battery bat2: second power switch QW2-first battery bat1-first system load circuit sysLD1-second system load circuit sysLD2-second control switch SW2-second battery bat2.

Optionally, when the first battery bat1 discharges to the first system load circuit sysLD1 and the second system load circuit sysLD2, the first control switch SW1 is turned on under the action of the first control signal SC1, the second power switch QW2 is turned on under the action of the fourth control signal SC4, the second control switch SW2 is turned off under the action of the second control signal SC2, and the first power switch QW1 is turned off under the action of the third control signal SC3. In this case, there is a discharge channel of the first battery bat1: second power switch QW2-first battery bat1-first system load circuit sysLD1-second system load circuit sysLD2.

Alternatively, when the second battery bat2 discharges to the first system load circuit sysLD1 and the second system load circuit sysLD2, the second control switch SW2 is turned on under the action of the second control signal SC2, the first control switch SW1 is turned off under the action of the first control signal SC1, the second power switch QW2 is turned off under the action of the fourth control signal SC4, and the first power switch QW1 is turned off under the action of the third control signal SC3. In this case, there is a discharge channel of the second battery bat2: second battery bat2-second control switch SW2-second system load circuit sysLD2-first system load circuit sysLD1.

In FIG. 6 to FIG. 9, an example in which the at least one second panel P2 includes one second panel P2 is used for description. The following describes a case in which the at least one second panel P2 includes a plurality of second panels P2.

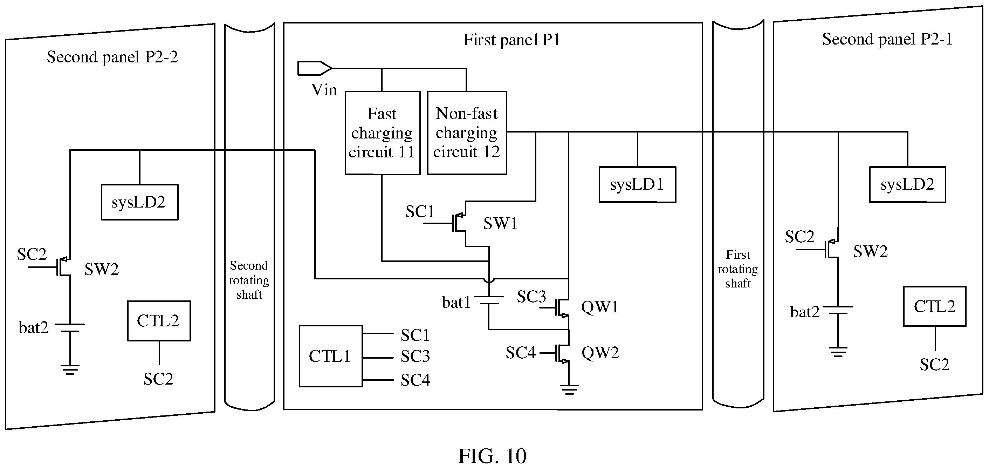

For example, as shown in FIG. 10, when the at least one second panel P2 includes a plurality of second panels P2, the at least one second circuit 2 includes a plurality of second circuits 2, and the plurality of second circuits 2 are connected in parallel. The first panel P1 and the plurality of second panels P2 are connected through a plurality of rotating shafts, and circuits of two adjacent panels are coupled across the rotating shafts. That is, one jumper wire is disposed in the rotating shaft that connects two adjacent panels, so that the circuits in the two panels are coupled. In FIG. 10, an example in which the at least one second panel P2 includes two second panels P2 that are respectively represented as P2-1 and P2-2, the second panel P2-1 is connected to the first panel P1 through a first rotating shaft, and the second panel P2-2 is connected to the first panel P1 through a second rotating shaft is used for description.

Specifically, when the at least one second circuit 2 includes the plurality of second circuits 2, and the fast charging circuit 11 or the non-fast charging circuit 12 is used to charge the first battery bat1 and a plurality of second batteries bat2 used in the plurality of second circuits 2, a charging principle of the plurality of second circuits 2 is consistent with a charging principle of the second circuit 2 described above. In addition, when the fast charging circuit 11 is used to charge the first battery bat1 and the plurality of second batteries bat2, the plurality of batteries bat2 are charged in parallel, and the first battery bat1 is charged in series with the plurality of second batteries bat2 connected in parallel. When the non-fast charging circuit 12 is used to charge the first battery bat1 and the plurality of second batteries bat2, the first battery bat1 and the plurality of second batteries bat2 are charged in parallel. When the first battery bat1 and the plurality of second batteries bat2 discharge, a discharge principle of the plurality of second circuits 2 is consistent with a discharge principle of the second circuit 2 described above, and the first battery bat1 and the plurality of second batteries bat2 discharge in parallel.

Further, the circuit system may further include at least one controller (controller, CTL). The at least one controller may be used for the first panel P1 and one or more of the at least one second panel P2, and is configured to generate the first control signal SC1, the second control signal SC2, the third control signal SC3, and the fourth control signal SC4. The at least one controller may include the processor 170 shown in FIG. 1.

In an example, as shown in FIG. 7 and FIG. 8, the circuit system further includes a controller, and the controller may be represented as a first controller CTL1. The first controller CTL1 may be used for the first panel P1, and is configured to generate the first control signal SC1, the second control signal SC2, the third control signal SC3, and the fourth control signal SC4. Optionally, the first controller CTL1 may be the processor 170 shown in FIG. 1.

In another example, as shown in FIG. 9 and FIG. 10, the circuit system further includes a plurality of controllers, and the plurality of controllers may include the first controller CTL1 and at least one second controller CTL2. The first controller CTL1 is used for the first panel P1, and is configured to generate the first control signal SC1, the third control signal SC3, and the fourth control signal SC4. Each second controller CTL2 corresponds to a second panel P2 in the at least one second panel P2, and is configured to generate the second control signal SC2. The first controller CTL1 and the second controller CTL2 may be the processor 170 shown in FIG. 1.

In this embodiment of this application, the circuit system includes the first circuit 1 of the first panel and the at least one second circuit 2 of the at least one second panel. Each second circuit 2 of the at least one second circuit 2 corresponds to a second panel of the at least one second panel. The first circuit 1 and the at least one second circuit 2 are coupled through a power supply channel between two circuits located in two adjacent panels by using only one jumper wire in a rotating shaft that connects the two panels. For example, the first circuit 1 of the first panel P1 and the second circuit of the second panel P2 need to be coupled through the rotating shaft by using only one jumper wire. This reduces impedance of the jumper wire in comparison with a related technology in which coupling is performed by using at least two jumper wires. In this way, the first control switch SW1, the second control switch SW2, the first power switch QW1, and the second power switch QW2 are controlled to be turned on and off, so that when the fast charging circuit 11 or the non-fast charging circuit 12 in the first circuit 1 may charge batteries disposed in different panels, or batteries in different panels discharge, power consumption during charging and discharging is reduced.

Based on this, an embodiment of this application further provides a foldable terminal. The foldable terminal includes any circuit system, the first panel, the at least one second panel, and the at least one rotating shaft that are provided above. The at least one rotating shaft is configured to connect the first panel to the at least one second panel.

Optionally, the first end of the first control switch in the circuit system is coupled to the first end of the second control switch through a jumper wire, where the jumper wire crosses the rotating shaft between the first panel and the second panel, and the jumper wire is a unique channel for coupling the fast charging circuit or the non-fast charging circuit to the second battery.

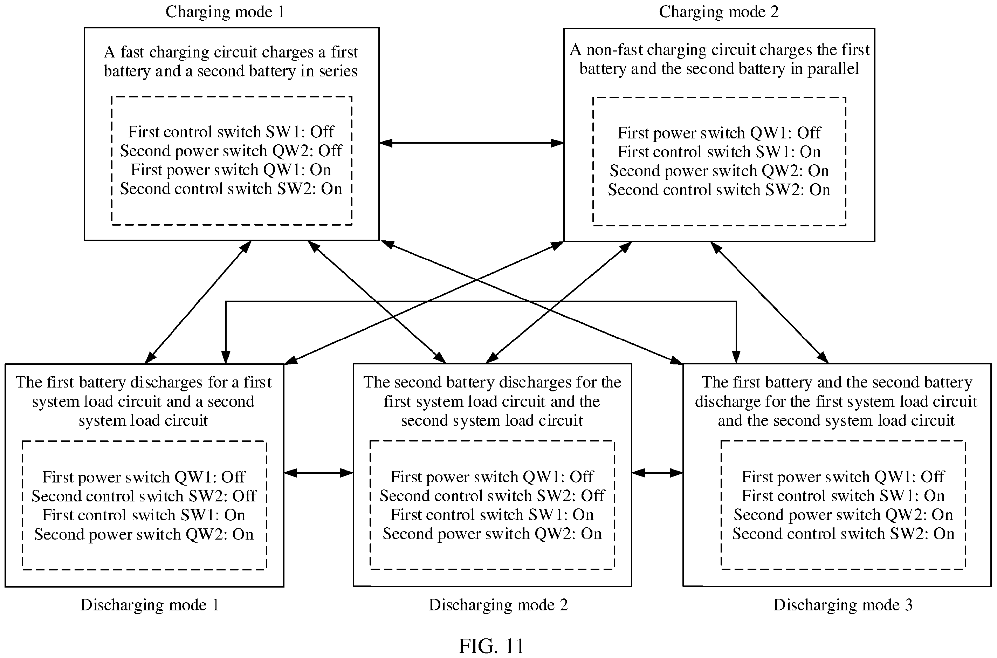

FIG. 11 is a diagram of a control method of a circuit system according to an embodiment of this application. The circuit system may be used in a foldable terminal, and the circuit system may be any circuit system provided above. The circuit system may include a plurality of working modes. The plurality of working modes may include two charging modes (which are represented as a charging mode 1 and a charging mode 2) and three discharging modes (which are represented as a discharging mode 1 to a discharging mode 3). The following describes the plurality of working modes.

The charging mode 1 may also be referred to as a fast charging mode, and means that a battery is charged by the fast charging circuit. Specifically, when the fast charging circuit is used to charge the first battery and the second battery in series, the first power switch QW1 may be turned on based on the third control signal SC3, the second control switch SW2 may be turned on based on the second control signal SC2, the first control switch SW1 may be turned off based on the first control signal SC1, and the second power switch QW2 may be turned off based on the fourth control signal SC4. That is, when the fast charging circuit charges the first battery and the second battery in series, states of the foregoing four switches are as follows: The first control switch SW1 is turned off, the second power switch QW2 is turned off, the first power switch QW1 is turned on, and the second control switch SW2 is turned on.

The charging mode 2 may also be referred to as a common charging mode, and means that a battery is charged by the non-fast charging circuit. Specifically, when the non-fast charging circuit is used to charge the first battery bat1 and the second battery bat2 in parallel, the first control switch SW1 is turned on based on the first control signal SC1, the second power switch QW2 is turned on based on the fourth control signal SC4, the first power switch QW1 is turned off based on the third control signal SC3, and the second control switch SW2 is turned on based on the second control signal SC2. That is, when the non-fast charging circuit charges the first battery and the second battery in series, states of the foregoing four switches are as follows: The first power switch QW1 is turned off, the first control switch SW1 is turned on, the second power switch QW2 is turned on, and the second control switch SW2 is turned on.

The discharging mode 1 means that the first battery is used for discharging. Specifically, when the first battery discharges to the first system load circuit and the second system load circuit, the first control switch SW1 is turned on based on the first control signal SC1, the second power switch QW2 is turned on based on the fourth control signal SC4, the second control switch SW2 is turned off based on the second control signal SC2, and the first power switch QW1 is turned off based on the third control signal SC3. That is, when the first battery discharges to the first system load circuit and the second system load circuit, states of the foregoing four switches are as follows: The second control switch SW2 is turned off, the first power switch QW1 is turned off, the first control switch SW1 is turned on, and the second power switch QW2 is turned on.

The discharging mode 2 means that the second battery is used for discharging. Specifically, when the second battery discharges to the first system load circuit and the second system load circuit, the second control switch SW2 is turned on based on the second control signal SC2, the first control switch SW1 is turned off based on the first control signal SC1, the second power switch QW2 is turned off based on the fourth control signal SC4, and the first power switch QW1 is turned off based on the third control signal SC3. That is, when the second battery discharges to the first system load circuit and the second system load circuit, states of the foregoing four switches are as follows: The first control switch SW1 is turned off, the second power switch QW2 is turned off, the first power switch QW1 is turned off, and the second control switch SW2 is turned on.

The discharging mode 3 means that the first battery and the second battery are used for discharging. Specifically, when the first battery and the second battery discharge to the first system load circuit and the second system load circuit, the first control switch SW1 is turned on based on the first control signal SC1, the second power switch QW2 is turned on based on the fourth control signal SC4, the first power switch QW1 is turned off based on the third control signal SC3, and the second control switch SW2 is turned on based on the second control signal SC2. That is, when the first battery and the second battery discharge to the first system load circuit and the second system load circuit, states of the foregoing four switches are as follows: The first power switch QW1 is turned off, the first control switch SW1 is turned on, the second power switch QW2 is turned on, and the second control switch SW2 is turned on.

Optionally, the circuit system may switch among the foregoing plurality of working modes. When the circuit system switches from one working mode to another working mode, the switching may be implemented by controlling states of the foregoing four switches. In addition, in a working mode switching process of the circuit system, when some switches need to be switched from on to off, and some other switches need to be switched from off to on, switching from on to off may be first performed, and then switching from off to on may be performed.

In an example, when the circuit system switches from the charging mode 1 to the charging mode 2, the second control switch SW2 is kept on, the first power switch QW1 is switched from on to off, the first control switch SW1 is switched from off to on, and the second power switch QW2 is switched from off to on.

In another example, when the circuit system switches from the charging mode 2 to the charging mode 1, the second control switch SW2 is kept on, the first control switch SW1 is switched from on to off, the second power switch QW2 is switched from on to off, and the first power switch QW1 is switched from off to on.

In the foregoing example, only an example in which the circuit system switches between the charging mode 1 and the charging mode 2 is used for description. The circuit system may alternatively switch among different charging modes and different discharging modes, or may switch among different discharging modes. For a specific switching process, refer to FIG. 11 and descriptions of different working modes. Details are not listed one by one in embodiments of this application.

The foregoing detailed descriptions of the circuit system may be correspondingly cited in the foldable terminal and the control method of the circuit system. Details are not described herein again in embodiments of this application.

Finally, it should be noted that the foregoing descriptions are merely specific implementations of this application, but are not intended to limit the protection scope of this application. Any variation or replacement within a technical scope disclosed in this application shall fall within the protection scope of this application. Therefore, the protection scope of this application shall be subject to the protection scope of the claims.

## Claims

1. A circuit system, used in a foldable terminal comprising a first panel and at least one second panel, wherein the circuit system comprises a first circuit of the first panel and at least one second circuit of the at least one second panel, and each second circuit of the at least one second circuit corresponds to a second panel of the at least one second panel;
the first circuit comprises a fast charging circuit, a non-fast charging circuit, a first control switch, a first power switch, and a second power switch;
each second circuit comprises a second control switch;
an output end of the non-fast charging circuit is coupled to a first end of the first control switch, a first end of the second control switch, and a first end of the first power switch;
an output end of the fast charging circuit is coupled to a second end of the first control switch and an electrode of a first battery corresponding to the first panel;
a second end of the first power switch and a first end of the second power switch are coupled to another electrode of the first battery;
a second end of the second power switch is grounded; and
a second end of the second control switch is coupled to an electrode of a second battery corresponding to the second panel, and another electrode of the second battery is grounded.

2. The circuit system according to claim 1, wherein the first end of the first control switch is coupled to the first end of the second control switch across a rotating shaft between the first panel and the second panel.

3. The circuit system according to claim 1 or 2, wherein
a control end of the first control switch is configured to receive a first control signal;
a control end of the second control switch is configured to receive a second control signal;
a control end of the first power switch is configured to receive a third control signal; and
a control end of the second power switch is configured to receive a fourth control signal.

4. The circuit system according to claim 3, wherein when the fast charging circuit charges the first battery and the second battery in series, the first power switch is turned on under an action of the third control signal, the second control switch is turned on under an action of the second control signal, the first control switch is turned off under an action of the first control signal, and the second power switch is turned off under an action of the fourth control signal.

5. The circuit system according to claim 3 or 4, wherein when the non-fast charging circuit charges the first battery and the second battery in parallel, the first control switch is turned on under the action of the first control signal, the second power switch is turned on under the action of the fourth control signal, the second control switch is turned on under the action of the second control signal, and the first power switch is turned off under the action of the third control signal.

6. The circuit system according to any one of claims 3 to 5, wherein the first circuit further comprises a first system load circuit corresponding to the first panel;
each second circuit further comprises a second system load circuit corresponding to the second panel;
when the first battery discharges to the first system load circuit and the second system load circuit, the first control switch is turned on under the action of the first control signal, the second power switch is turned on under the action of the fourth control signal, the second control switch is turned off under the action of the second control signal, and the first power switch is turned off under the action of the third control signal;
when the second battery discharges to the first system load circuit and the second system load circuit, the second control switch is turned on under the action of the second control signal, the first control switch is turned off under the action of the first control signal, the second power switch is turned off under the action of the fourth control signal, and the first power switch is turned off under the action of the third control signal; and
when the first battery and the second battery discharge to the first system load circuit and the second system load circuit, the first control switch is turned on under the action of the first control signal, the second power switch is turned on under the action of the fourth control signal, the second control switch is turned on under the action of the second control signal, and the first power switch is turned off under the action of the third control signal.

7. The circuit system according to any one of claims 1 to 6, wherein the at least one second panel comprises a plurality of second panels, the at least one second circuit comprises a plurality of second circuits, and the plurality of second circuits are connected in parallel.

8. The circuit system according to any one of claims 1 to 7, wherein the first control switch, the second control switch, the first power switch, and the second power switch each comprise a metal oxide semiconductor MOS transistor.

9. The circuit system according to any one of claims 3 to 6, wherein the circuit system further comprises at least one controller used for one or more of the first panel and the at least one second panel and configured to generate the first control signal, the second control signal, the third control signal, and the fourth control signal.

10. A foldable terminal, wherein the foldable terminal comprises the circuit system, the first panel, and the at least one second panel according to any one of claims 1 to 9, and at least one rotating shaft; and the at least one rotating shaft is configured to connect the first panel to the at least one second panel.

11. The foldable terminal according to claim 10, wherein the first end of the first control switch is coupled to the first end of the second control switch through a jumper wire, the jumper wire crosses a rotating shaft between the first panel and a second panel, and the jumper wire is a unique channel for coupling the fast charging circuit or the non-fast charging circuit to the second battery.
